# EUROPEAN PATENT SPECIFICATION

(11) **EP 2 346 133 B1**
(45) Date of publication and mention of the grant of the patent: **01.11.2017**
(21) Application number: 10000319.3
(22) Date of filing: 14.01.2010
(51) Int. Cl.: H02J 3/38, H02J 3/18

(54) **Converter device and method for converting electrical power**
Wandlervorrichtung und Verfahren zum Umwandeln von Strom
Dispositif de convertisseur et procédé de conversion d'alimentation électrique

(43) Date of publication of application: 20.07.2011
(73) Proprietor: Siemens Aktiengesellschaft, 80333 München (DE)
(72) Inventor: Andresen, Björn, Saby 8752 Ostbirk (DK); Wulff, Steffen, 28217 Bremen (DE)

(56) References cited:
- EP-A1- 1 386 078
- EP-A1- 2 066 017
- FR-A1- 2 823 381
- US-B2- 7 638 893
- TSILI M ET AL: "A review of grid code technical requirements for wind farms" IET RENEWABLE POWER GENERATION,, vol. 3, no. 3, 8 September 2009 (2009-09-08), pages 308-332, XP006033762 ISSN: 1752-1424

## Description

### Field of the Invention

The present invention relates to the field of converter devices for converting input power into an electrical output power. In particular, the present invention relates to the field of converter devices for wind turbines.

### Art Background

There are known energy generating devices, which provide a varying power to an electricity network to which they are coupled. For example, a wind turbine provides less power for lower wind speeds. Another example is a solar energy plant, the output power of which depends on the availability and intensity of sunlight. The varying power may lead to voltage disturbances in the electricity network. Further, consumers which take power out of the electricity network may generate disturbances in the electricity network.

EP 1 386 078 B1 discloses a method for operation of a wind energy installation so as to provide a wind turbine or a wind park capable of reducing or at least not significantly increasing the undesired variations of the voltage in an electricity network compared to a situation without the wind turbine, according to the preamble of claim 1. The wind energy installation has an electrical generator, which can be driven by a rotor in order to emit electrical power to an electrical network with a wattless component being fed into the electrical network. The wattless component is predetermined by a phase angle ϕ, which describes an angle between the current and the voltage of the electrical volt amperes that are fed in, wherein the phase angle ϕ is varied as a function of the magnitude of at least one voltage, which is detected in the network, such that the phase angle is unchanged provided that the network voltage is between a predetermined lower threshold value and a predetermined upper threshold value, with the lower voltage value being less than a nominal voltage value and the predetermined upper voltage value being greater than a predetermined nominal voltage value. If the predetermined upper voltage value is exceeded or the predetermined lower voltage value is undershot, the magnitude of the phase angle arises as the voltage arises or falls further.

In view of the above described situation, there exists a need for an improved converter device that enables to accommodate voltage variations in an electricity network.

### Summary of the Invention

This need may be met by the subject-matter according to the independent claims. Advantageous embodiments of the herein disclosed subject-matter are described by the dependent claims.

According to a first aspect of the herein disclosed subject matter, there is provided a converter device, according to the subject-matter of claim 1, for converting an input power to an electrical output power. The converter device comprises a voltage input for receiving a voltage signal, wherein the voltage signal is indicative of a voltage in an electricity network to which the converter device is coupled during operation in order to provide said electrical output power to said electricity network. Further, the converter device comprises a controller which is configured for maintaining the phase angle between the voltage and the current of the electrical output power at a constant out-of-band value if the voltage indicated by the voltage signal is outside the predetermined voltage band.

Herein, the phase angle between the voltage and the current of the electrical output power is refers to the usual definition of the phase angle on the basis of the total current (complex current, including active and reactive current) of the electrical output power.

According to an embodiment, the controller is further configured setting an active current component of said electrical output power to zero if the voltage indicated by the voltage signal is outside a predetermined voltage band. For example, according to an embodiment the active current component is the active current of one phase of the electrical output power. For example, if the electrical output power has three phases, according to an embodiment an individual one of the herein described controller is provided for each phase. According to other embodiments a single controller is provided for two or more phases of the electrical output power.

According to an embodiment of the first aspect, the controller is configured for setting a reactive component of the electrical output power depending on the voltage signal while maintaining the phase angle between the voltage and the current of the electrical output power at the constant out-of-band value if the voltage indicated by the voltage signal is outside the predetermined voltage band.

According to an embodiment, the reactive component is a reactive current. Other examples of reactive components are reactive power, phase angle or power factor. These reactive components are well-known to those skilled in the art and are not discussed in further detail. Further, the reactive component may be the reactive component of one phase of a multiphase electrical output power. Hence, the phase angle may be set by directly setting the phase angle itself or, according to another embodiment may be set indirectly by setting a reactive component which is in a functional relationship with the phase angle. However, the reactive component is set according to the out-of-band value of the phase angle. In other words, the reactive component is set such that the resulting phase angle is maintained at the predetermined out-of-band value.

The voltage signal may be generated in any suitable way. For example, according to an embodiment, the voltage signal is derived from the electrical output provided by the converter device. According to another embodiment, the voltage which is indicated by the voltage signal is a voltage in an electricity network to which the converter is coupled.

According to an embodiment, the converter device is configured for receiving a mechanical input power. For example, according to an embodiment, a converter device may include a doubly fed induction generator, e.g. of the type known from US 6,448,735 B1.

According to another embodiment, the input power is an electrical input power. In other words, according to this embodiment, the converter device is configured for receiving an electrical input power. To this end, the converter device may comprise at least one converter, e.g. a frequency converter, for converting electrial input power into electrical output power. Since in this case the converter device is operates only on the electrical side, it is also referred to herein as electrical converter device.

According to an embodiment, the converter device is a converter device of a wind turbine. According to a further embodiment, the converter device is an electrical converter device of a wind turbine and is thus configured for converting an electrical input power generated by a generator of the wind turbine into an electrical output power.

Generally, the electrical power generated by a generator of electric energy may be preconverted so as to provide the electrical input power of the electrical converter device. The preconversion may be of any suitable type known in the art. For example, a rectifier may be coupled between the output of the generator and the power input of the converter device, which receives the electrical input power.

The predetermined voltage band is sometimes referred to as dead band. Further, the term "voltage band" is used synonymously for a voltage interval.

The predetermined voltage band may be fixedly pre-programmed in the converter device. According to another embodiment, the converter device comprises a control input for receiving at least one voltage band control signal. The converter device may be further configured for setting the predetermined voltage band in response to the received voltage band control signal.

The width of the predetermined voltage band may be in the range from 0% up to 20% of the rated voltage. According to another embodiment, the width of the predetermined voltage band is in the range from 5% to 15% of the rated voltage. According to embodiments, the percentages disclosed herein relate to respective +/- values such that the percentage values denote half of the respective interval. For example, if the rated voltage is 240 V and the width of the predetermined voltage band is 10% of the rated voltage, then the width of the predetermined voltage band amounts to +/- 24 V, i.e. the predetermined voltage band is [rated voltage - 24 V; rated voltage + 24 V]. In other embodiments, the percentage values indicate the whole interval.

According to an embodiment, the predetermined voltage band is centered around the rated voltage, whereas according to other embodiments, the predetermined voltage band is non-symmetrically disposed with regard to the rated voltage.

According to an embodiment, the controller is configured for setting the magnitude of the out-of-band value of the phase angle depending on a magnitude of a voltage disturbance of said voltage in said electricity network. Herein, a magnitude of a voltage disturbance may include at least one of e.g. a magnitude of a deviation from the predetermined voltage band, and a duration of the deviation from the predetermined voltage band, etc. According to other embodiments, the controller has stored therein a fixed out-of-band value of the phase angle, which is not altered by the controller, at least not in response to the voltage signal. According to another embodiment, the out-of-band value of the phase angle is altered in response to receiving a control signal indicating an out-of-band value to be set.

According to an embodiment, the predetermined out-of-band phase angle is 90 degrees, corresponding to an active current of zero. This has the advantage that only one current component influences the electrical output power of the converter device.

Generally herein, the term "setting" is to be interpreted in a broad sense. For example setting a certain quantity (e.g. the phase angle, an active component, a reactive component, etc.) depending on a voltage signal includes e.g. setting the quantity depending on the voltage signal at defined time intervals, varying the quantity (e.g. the magnitude of the reactive current) in response to a varying voltage signal, etc. In particular "setting a reactive component depending on a voltage signal" includes e.g. setting the reactive component depending on the voltage signal at defined time intervals, varying the reactive component in response to a varying voltage signal, etc.

According to an embodiment, the controller is configured for setting the sign of the phase angle so as to drive the voltage of its phase towards the predetermined voltage band.

According to a further embodiment, the controller is configured for changing the phase angle between the voltage and the current of the electrical output power at the boundary of said predetermined voltage interval in a stepwise manner.

It should be mentioned that whenever the controller takes into account current signals, a respective current measuring unit is provided in order to measure a current signal representative of the current or the electrical output power, which current signal is taken into account by the controller.

According to a further embodiment, the controller of the converter device is configured for operating with a constant in-band value of the phase angle between the voltage and the current of the electrical output power if, e.g. as long as, the voltage indicated by the voltage signal is inside the predetermined voltage band.

According to a further embodiment, the in-band phase angle is different from the out-of-band phase angle.

According to a further embodiment, the converter device further comprises a control input for receiving a control signal. Further the controller being configured for setting, in response to the control signal, at least one of an in-band value and an out-of-band value of a phase angle between the voltage and the current of the electrical output power.

According to a second aspect of the herein disclosed subject-matter, a power plant is provided, the power plant comprising a converter device according to the first aspect or an embodiment thereof.

According to an embodiment of the second aspect, the power plant further comprises a power generator for generating the electrical input power. For example, according to an embodiment, the power generator is an electrical generator of a wind turbine. According to another embodiment, the power generator is a solar energy module. However, it should be understood that any power generator may be used with embodiments of the converter device according to the herein disclosed subject-matter.

According to a further embodiment of the second aspect, the power plant further comprises a power plant controller for providing a control signal to the converter device for varying a setting of at least one of an in-band value and an out-of-band value of the phase angle between the voltage and the current of the electrical output power.

Further, according to another embodiment, the controller of the converter device is configured for setting the phase angle to the out-of-band value if (e.g. as long as) the voltage indicated by the voltage signal is outside the predetermined voltage band.

Controlling the out-of-band value for the phase angle may allow e.g. for adaption of the out-of-band value of the phase angle to measured or estimated depth of a voltage overshot or undershoot, i.e. to a estimated or measured deviation of the voltage indicated by the voltage signal from the predetermined voltage band.

According to a third aspect of the herein disclosed subject-matter, a method for converting an input power to an electrical output power is provided, the method comprising (i) receiving a voltage signal, wherein the voltage signal is indicative of a voltage in a electricity network to which the electrical output power is supplied and (ii) setting the phase angle between the voltage and the current of the electrical output power at a constant out-of-band value if the voltage indicated by the voltage signal is outside the predetermined voltage band.

According to an embodiment, the method comprises setting an active current component of said electrical output power to zero if the voltage indicated by the voltage signal is outside a predetermined voltage band.

According to a further embodiment, the method comprises setting a reactive component of the electrical output power depending on the voltage signal so as to keep the phase angle between the voltage and the current of the electrical output power at the constant out-of-band value if the voltage indicated by the voltage signal is outside the predetermined voltage band.

According to a fourth aspect of the herein disclosed subject-matter, a method for operating a power plant controller is provided, the method comprising providing a control signal to a controller of a converter device, wherein the converter device is configured for converting an input power to an electrical output power, wherein the control signal is configured for setting of the controller of the converter device an out-of-band value for phase angle between the voltage and the current of the electrical output power.

According to a fifth aspect of the herein disclosed subject-matter, a computer readable medium is provided, wherein on the computer readable medium there is stored a computer program for controlling a phase angle of an electrical output power of a converter device, the computer program, when being executed by data processor, is adapted for controlling or for carrying out the method as set forth in the third aspect or an embodiment thereof.

According to a sixth aspect of the herein disclosed subject-matter a program element is provided, the program element being configured for controlling a phase angle of an electrical output power of a converter device, the program element, when being executed by a data processor, is adapted for controlling or for carrying out the method as set forth in the third aspect or an embodiment thereof.

According to a seventh aspect of the herein disclosed subject-matter, a computer readable medium is provided, wherein on the computer readable medium there is stored a computer program for setting an out-of-band value for a phase angle between the voltage and the current of an electrical output power of a converter device, the computer program, when being executed by data processor, is adapted for controlling or for carrying out the method as set forth in the fourth aspect or an embodiment thereof.

According to a eight aspect of the herein disclosed subject-matter a program element is provided, the program element being configured for setting an out-of-band value for a phase angle between the voltage and the current of an electrical output power of a converter device, the program element, when being executed by data processor, is adapted for controlling or for carrying out the method as set forth in the fourth aspect or an embodiment thereof.

As used herein, reference to a program element and/or a computer readable medium is intended to be equivalent to a reference to a computer program containing instruction for controlling a computer system to coordinate the performance o the above described methods.

The computer program may be implemented as computer readable instruction code by use of any suitable programming language, such as, for example, JAVA, C++, and may be stored on a computer-readable medium (removable disk, volatile or nonvolatile memory, embedded memory/processor, etc.). The instruction code is operable to program a computer or any other programmable device to carry out the intended functions. The computer program may be available from a network, such as the World Wide Web, from which it may be downloaded.

The herein disclosed subject matter may be realized by means of a computer program respectively software. However, the herein disclosed subject matter may also be realized by means of one or more specific electronic circuits respectively hardware. Furthermore, the invention may also be realized in a hybrid form, i.e. in a combination of software modules and hardware modules.

In the following, there will be described exemplary embodiments of the subject-matter disclosed herein with reference to a converter device and a method for converting an input power into an electrical output power. It has to be pointed out that of course any combination of features relating to different aspects of the herein subject-matter is also possible. In particular, some embodiments have been described with reference to apparatus type claims whereas other embodiments have been described with reference to method type claims. However, a person skilled in the art will gather from the above and the following description that, unless otherwise notified, in addition to any combination of features belonging to one aspect also any combination between features relating to different aspects or embodiments, for example even between features of the apparatus type claims and the features of the method type claims, as well as between features relating to the converter device and features relating to a power plant is considered to be disclosed with this application.

The aspects and embodiments defined above and further aspects and embodiments of the herein disclosed subject-matter are apparent from the examples to be described hereinafter and are explained with reference to the drawings but to which the invention is not limited.

### Brief Description of the Drawings

- Fig. 1: shows schematically a power plant in accordance with embodiments of the herein disclosed subject-matter.
- Fig. 2: schematically shows a functional dependency between a voltage in an electricity network and a phase angle between voltage and current of an output power of a converter device in accordance with embodiments of the herein disclosed subject matter.
- Fig. 3: schematically shows a further functional dependency between a voltage in an electricity network and a phase angle between voltage and current of an output power of a converter device in accordance with embodiments of the herein disclosed subject matter.

### Detailed Description

The illustration in the drawings is schematic. It is noted that in different figures, similar or identical elements are provided with the same reference signs or with reference signs, which are different from the corresponding reference signs only within an appended character.

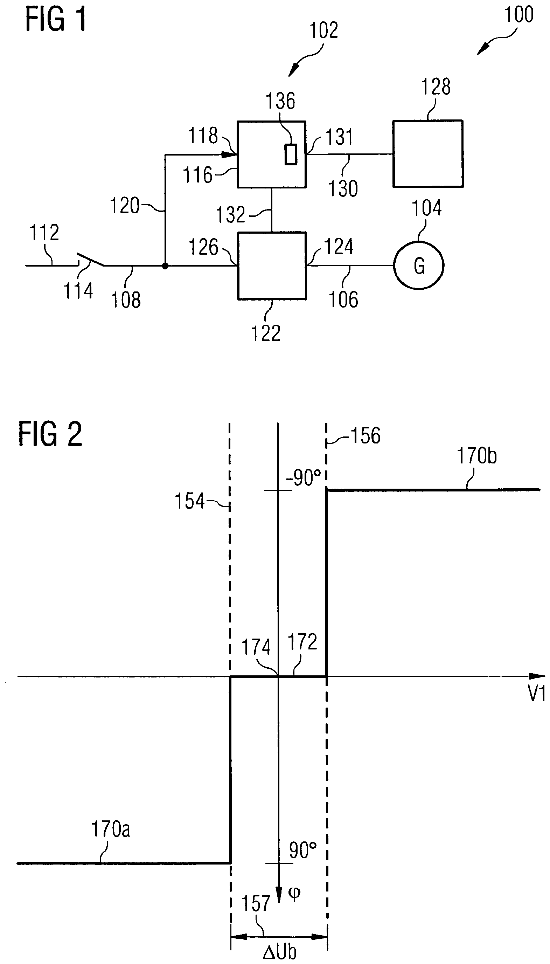

Fig. 1 shows schematically a part of the power plant 100 according to embodiments of the herein disclosed subject-matter. The power plant 100 comprises a converter device 102 in the form of an electrical converter device and a power generator 104. As used herein, the term "electrical converter device" relates to an embodiment wherein the input power of the converter device is electrical power.

The converter device 102 is configured for converting an electrical input power 106 supplied by the power generator 104 into an electrical output power, indicated at 108 in Fig. 1. The electrical output power 108 is coupleable with an electricity network which is indicated at 112 in Fig. 1. According to an embodiment, the electricity network 112 is a grid. Coupling of the converter device 102 in this manner with the electricity network 112 may be performed by any suitable means, e.g. a main switch 114 in one embodiment. It should be noted, that although the main switch 114 is in an open state in Fig. 1, in operation, the main switch 114 will be closed, thereby coupling the power plant 100 to the electricity network 112.

Further, the converter device comprises a voltage input 118 for receiving a voltage signal indicative of a voltage in the electricity network 112. The voltage signal may be part of a feedback signal which includes the voltage signal and at least on further quantity, e.g. a current signal indicative of a current of the electrical output power 108. This current indicated by the current signal may be an active current, a reactive current or a total (complex) current including the active current and the reactive current.

According to an embodiment shown in Fig. 1, the converter device 102 further comprises a controller 116 for controlling the electrical output power. According to an embodiment, the voltage input 118 is a voltage input of the controller 116.

According to an embodiment, the power plant 100 operates inside a predetermined voltage band with a constant reactive power factor which means that at least one of an active component (e.g. active current) and a reactive component (e.g. reactive current) are set depending on the voltage signal 120 so as to keep the reactive power factor at a constant value, at least within certain limits.

According to an embodiment, if the voltage (which is indicated by the voltage signal 120) leaves the predetermined voltage band (overshot or undershoot), the reactive current will be varied as a function of the magnitude of the voltage which is detected in the electricity network 112 (indicated by the voltage signal 120).

According to a further embodiment, if the voltage indicated by the voltage signal 120 leaves the predetermined voltage band (overshot or undershoot), the active current of the electrical output power is set to zero. Alternatively or additionally, in respective embodiments the phase angle between the voltage and the current of the electrical output power 108 is maintained at a predetermined out-of-band value, e.g. at an out-of-band value the magnitude of which is larger than 0 degrees and smaller than 90 degrees. This may be accomplished e.g. by setting one of the active current and the reactive current of the electrical output power 108 to a respective value.

If the active power is set to zero or to a very small value, the countertorque acting of the generator is also zero or very small. For example in the case of a wind turbine this may lead to an acceleration of the rotor, depending on the velocity of the wind. Hence, depending on the duration of the grid fault (e.g. the duration of the time for which the voltage indicated by the voltage signal is outside the predetermined voltage band) it may be advantageous if active current is fed in the electricity network even if the voltage indicated by the voltage signal is outside the predetermined voltage band. If for example the converter device 102 delivers the desired reactive current to the electricity network 112 (in order to stabilize the electricity network) then, according to an embodiment, the active power is increased (decreasing the phase angle) up to the limits of the converter.

In order to effect the setting of at least one parameter of the electrical output power 108, a converter 122 is provided e.g. in the form of a frequency converter. Parameters of the electrical output power 108 include, but are not limited to active current, reactive current, active power, reactive power, phase angle, voltage, etc. However, it should be mentioned that according to other embodiments, a converter 122 is not necessary, and hence a generator may be directly connected to the grid, e.g. in the case of a doubly fed induction generator as known from US 6,448,735 B1. In such a case, the parameters of the electrical output power are set by applying respective control signals (e.g. stator current and voltage, timing, etc.) to the doubly fed generator.

According to an embodiment shown in Fig. 1, the converter 122 has an input 124 which is configured for receiving the electrical input power 106, e.g. a three-phase current. According to other embodiments, the converter 122 may be configured for receiving a direct current electrical input power. Further, the converter 122 comprises an output 126 for providing the electrical output power 108. As shown in Fig. 1, the voltage which is to be detected in the electricity network 112 may be measured at the output 126 of the converter 122, or more generally at an output of the converter device 102.

The power plant 100 further comprises a power plant controller 128 for providing control signals to the controller 116. The entirety of the control signals is denoted by 130 in Fig. 1 and may include e.g. a control signal for setting a desired power P, a control signal for setting the power slope dP/dt, corresponding to a certain change in power per time unit, and a control signal for setting a desired voltage, which is the rated voltage of the electricity network in one embodiment. According to other embodiments, the desired voltage is offset with respect to the rated voltage.

The controller 116 controls its associated converter 122 with a respective converter control signal 132 and may optionally receive, according to an embodiment, a feedback signals (not shown in Fig. 1) from the converter 122.

The power plant 100 shown in Fig. 1 is part of a wind turbine, wherein the gears and the rotor of the wind turbine are coupled to the generator 104 for driving the generator 104, but are not shown in Fig. 1. In operation, the wind power plant controller 128 controls the voltage of the electrical output power 108 and will support the desired output voltage (and hence the voltage in the electricity network 112) by feed-in of reactive current into the electrical output power 108 depending on the voltage level indicated by the voltage signal 120.

According to an embodiment, the power that can be delivered by the converter 122 is limited to a certain amount. For some converter types, the sum of the active current and the reactive current must be below this amount and hence the lower the active current, the higher can be the reactive current. However, these are limitations imposed by the design of the converter, which may vary widely with converter type and design.

Operating parameters of the converter device such as the out-of-band value of the phase angle between the voltage and the total (real) current of the electrical output power, and the settings of the above mentioned control signals, etc. may be stored in a memory 136 of the controller 116. The respective settings in the memory 136 may be at least partly fixedly stored and/or may be variable, e.g. by the power plant control 128. According to an embodiment, the power plant control 128 may continuously update the respective settings depending on actual properties of the electricity network, such as the impedance of the electricity network by issuing corresponding control signals 130 to the controller 116. The impedance of the electricity network may be determined by a targeted injection of a reactive power for a short time and measurement of relevant parameters of the electricity network.

According to other embodiments such an update of the respective settings by the power plant control 128 may be initiated manually.

As mentioned above, the electrical output power 108 may be a three-phase electrical output power. According to an embodiment, for each phase an individual controller 116 and, optionally, an individual converter 122 may be provided. According to another embodiment, a single controller may be provided for all three phases.

Fig. 2 exemplarily illustrates in-band control and out-of-band control of the phase angle ϕ as a function of the voltage V1 which is indicated by the voltage signal 120 according to embodiments of the herein disclosed subject matter. The phase angle ϕ is the phase angle between the voltage V1 and the total current of the electrical output power 108 (or of the total current of one phase of the electrical output power 108) .

Further illustrated in Fig. 2 is the predetermined voltage band ΔUb with a lower boundary 154 and an upper boundary 156 of the predetermined voltage band. According to an embodiment, the width 157 of the predetermined voltage band ΔUb is 5 % of the rated value of the voltage V1. According to other embodiments, the width 157 may be set to any value in the interval between 0 % and 20 % of the rated voltage. According to other embodiments, other values are possible.

According to an embodiment, the predetermined voltage band ΔUb is centered about the origin 174 at voltage V1 = rated voltage. According to other embodiments, the predetermined voltage band is located asymmetrically with regard to the rated voltage (not shown in Fig. 2). The rated voltage is indicated at 174 in Fig. 2).

According to an embodiment, the in-band value of the phase angle ϕ inside the predetermined voltage band ΔUb, indicated at 172 in Fig. 2, is zero. According to a further embodiment shown in Fig. 2, the magnitude of the phase angle ϕ outside the predetermined voltage band is 90 degrees. In particular for voltages V1 smaller than the lower boundary 154 of the predetermined voltage band ΔUb, the phase angle ϕ is +90 degrees. For voltages V1 greater than the upper boundary 156 of the predetermined voltage band ΔUb, the phase angle ϕ is -90 degrees.

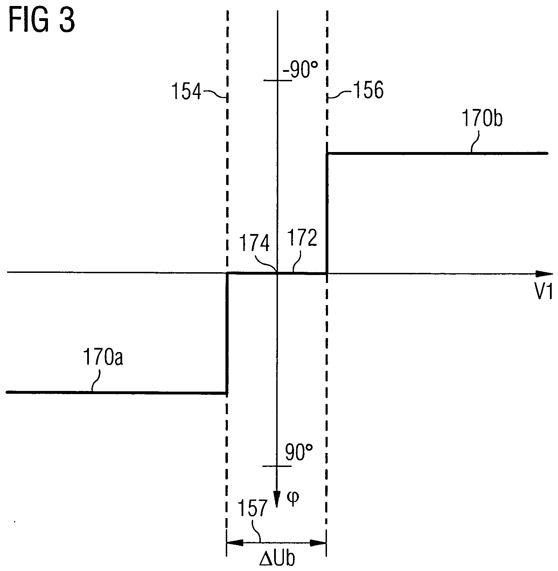

Fig. 3 exemplarily illustrates in-band control and out-of-band control of the phase angle ϕ as a function of the voltage V1 which is indicated by the voltage signal 120 according to other embodiments of the herein disclosed subject matter.

As shown in Fig. 3, according to an embodiment the phase angle ϕ is contolled so as to be zero within the predetermined voltage band ΔUb, indicated at 172 in Fig. 3. Further, in contrast to the control scheme of Fig. 2, outside the predetermined voltage band, the phase angle ϕ is controlled so as to be set to a predetermined out-of-band value, the magnitude of which is smaller than 90 degrees and larger than zero degrees. For example, according to an embodiment, the magnitude of the out-of-band value is between 10 degrees and 85 degrees in an embodiment. In a still other embodiment, the magnitude of the predetermined out-of-band value of phase angle ϕ is in the interval between 20 degrees and 80 degrees.

For example, in the exemplary embodiment shown in Fig. 3, for voltages V1 smaller than the lower boundary 154 of the predetermined voltage band ΔUb, the phase angle ϕ is +50 degrees and for voltages V1 greater than the upper boundary 156 of the predetermined voltage band ΔUb, the phase angle ϕ is -50 degrees.

According to embodiments shown in Fig. 2 and Fig. 3 the magnitude of the out-of-band value for phase angle ϕ takes the same value for the lower voltage region below the lower boundary 154 as for the upper voltage region above the upper boundary 156. According to other embodiments, the magnitude of a first out-of-band value 170a in the lower voltage region is different from the magnitude of a second out-of-band value 170b in the upper voltage region above the upper boundary 156.

According to embodiments of the invention, any suitable component of the power plant or of the converter device, e.g. the controller, is provided in the form of respective computer program products which enable a processor to provide the functionality of the respective elements as disclosed herein. According to other embodiments, any component of the power plant or of the converter device, e.g. the controller, may be provided in hardware. According to other - mixed - embodiments, some components may be provided in software while other components are provided in hardware.

According to an embodiment, the functionality provided by embodiments of the herein disclosed subject matter may be imposed on an existing converter device / existing power plant controller by means of a software update, firmware update, or the like.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

In order to recapitulate the above described embodiments of the present invention one can state:
It is described a converter device for power conversion in e.g. a power plant such as a wind turbine. The converter device is configured for converting an input power to an electrical output power. The converter device may be configured for receiving mechanical input power or, according to another embodiment, may be configured for receiving electrical input power. The converter device comprises a controller which is configured for setting a phase angle between a voltage and a total (complex) current of the electrical output power to a predetermined value if the voltage indicated by the voltage signal is outside a predetermined voltage band.

Embodiments of the herein disclosed subject matter result in a simple and more stable control of the electrical output power as the magnitude of the phase angle is kept constant at the same operating point during a grid fault i.e. when the voltage is outside the dead band. This way, the phase angle is not continuously changed as the voltage rises or falls further. The voltage level measured in the faulty grid is no longer used in a continuous control loop whereby stability is improved.

The load of the converters will be limited to use the full potential of the reactive current feed-in and to realize very short reaction times, especial during the starting point of the grid fault where it will take a short time to determine the depth of a voltage dip (e.g. of the grid fault). The higher the reactive current is, the stronger is the stabilizing effect, e.g. the counter action against the grid fault..

In an embodiment, where the out-of-band value of the phase between the voltage and the current is 90 degrees, the control mode may be more stable, because there is only one current component which has an influence.

The feeding-in of active current, thereby generating a counter torque in the generator, in case the wind power plant delivers the demanded reactive current, the reduces the mechanical loads of the wind power plant. Further the grid stability will be supported by an feeding-in of active current, because the wind power plant is then able to increase the active power after the fault in a faster time.

Further, according to an embodiment the out-of-band value of the phase angle outside the predetermined voltage is changed via online access to the power plant. This could be done e.g. by a grid operator. In this way, the control of the converter device may be adapted to actual operating parameters of the grid, e.g. a grid impedance.

## Claims

1. Converter device (102) for converting an input power (106) to an electrical output power (108), the converter device (102) comprising:
- a voltage input (118) for receiving a voltage signal (120), said voltage signal (120) being indicative of a voltage in a electricity network (112) to which the converter device (102) is coupled during operation in order to provide said electrical output power (108) to said electricity network (112);
- a controller (122); wherein
- the controller being configured for setting the phase angle between the voltage and the current of the electrical output power (108) at a constant out-of-band value (170a, 170b) if the voltage indicated by the voltage signal (120) is outside the predetermined voltage band (ΔUb), and keeping the magnitude of the phase angle constant during a grid fault when the voltage indicated by the voltage signal (120) is outside the predetermined voltage band (ΔUb);
**characterised by**
- the controller (122) being configured for changing the phase angle between the voltage and the current of the electrical output power (108) at the boundary of said predetermined voltage interval in a stepwise manner; and
- the controller (122) being configured for operating with a constant in-band value of the phase angle between the voltage and the current of the electrical output power (108) if the voltage indicated by the voltage signal (120) is inside the predetermined voltage band.

2. Converter device (102) according to claim 1,
- wherein controller (122) is configured for setting the magnitude of the out-of-band value (170a, 170b) of the phase angle depending on a magnitude of a voltage disturbance of said voltage in said electricity network (112).

3. Converter device (102) according to claim 1,
- the controller (122) being configured for setting the active current of said electrical output power (108) to zero if the voltage indicated by the voltage signal (120) is outside a predetermined voltage band.

4. Converter device (102) according to claim 3,
- wherein controller (122) is configured for varying said reactive component of said electrical output power (108) depending on the voltage signal (120).

5. Converter device (102) according to one of the preceding claims,
- further comprising a control input for receiving a control signal;
- the controller (122) being configured for setting, in response to the control signal, at least one of an in-band value and an out-of-band value (170a, 170b) of a phase angle between the voltage and the current of the electrical output power (108).

6. Power plant comprising
- a converter device (102) according to claim 1.

7. Power plant according to claim 6,
- further comprising a power plant controller (122) for providing a control signal to the converter device (102) for setting an out-of-band value (170a, 170b) of phase angle between the voltage and the total current of the electrical output power (108).

8. Method for converting an input power (106) to an electrical output power (108), the method comprising:
- receiving a voltage signal (120), said voltage signal (120) being indicative of a voltage in a electricity network (112) to which the electrical output power (108) is supplied;
wherein
- setting the phase angle between the voltage and the current of the electrical output power (108) at a constant out-of-band value (170a, 170b) if the voltage indicated by the voltage signal (120) is outside the predetermined voltage band; and
- keeping the magnitude of the phase angle constant during a grid fault when the voltage indicated by the voltage signal (120) is outside the predetermined voltage band (ΔUb);
**characterised by**
- changing the phase angle between the voltage and the current of the electrical output power (108) at the boundary of said predetermined voltage interval in a stepwise manner; and
- operating with a constant in-band value of the phase angle between the voltage and the current of the electrical output power (108) if the voltage indicated by the voltage signal (120) is inside the predetermined voltage band.

9. Method for operating a power plant controller (122), the method comprising:
- providing a control signal to a controller (122) of a converter device (102), wherein the converter device (102) is configured for converting an input power (106) to an electrical output power (108) by carrying out the method according to claim 8 ; and
- the control signal being configured for setting of the controller (122) of the converter device (102) an out-of-band value (170a, 170b) for phase angle between the voltage and the current of the electrical output power (108).

10. Computer readable medium, wherein on the computer readable medium there is stored a computer program for controlling a phase angle of an electrical output power (108) of a converter device (102), the computer program, when being executed by data processor, is adapted for controlling or for carrying out the method as set forth in claim 8.

11. Program element, the program element being configured for controlling a phase angle of an electrical output power (108) of a converter device (102), the program element, when being executed by a data processor, is adapted for controlling or for carrying out the method as set forth in claim 8.

12. Computer readable medium, wherein on the computer readable medium there is stored a computer program for setting an out-of-band value (170a, 170b) for a phase angle between the voltage and the current of an electrical output power (108) of a converter device (102), the computer program, when being executed by data processor, is adapted for controlling or for carrying out the method as set forth in claim 9.

13. Program element, the program element being configured for setting an out-of-band value (170a, 170b) for a phase angle between the voltage and the current of an electrical output power (108) of a converter device (102), the program element, when being executed by data processor, is adapted for controlling or for carrying out the method as set forth in claim 9.

## Patentansprüche

1. Wandlervorrichtung (102) zum Umwandeln eines Eingangsstroms (106) in einen Ausgangsstrom (108), wobei die Wandlervorrichtung (102) Folgendes umfasst:
- einen Spannungseingang (118) zum Empfangen eines Spannungssignals (120), wobei das Spannungssignal (120) eine Spannung in einem Stromnetz (112) anzeigt, an das die Wandlervorrichtung (102) während des Betriebs gekoppelt ist, um den Ausgangsstrom (108) in das Stromnetz (112) zu liefern;
- eine Steuereinheit (122);
wobei
- die Steuereinheit dafür ausgelegt ist, den Phasenwinkel zwischen der Spannung und dem Strom des Ausgangsstroms (108) auf einen konstanten Außerband-Wert (170a, 170b) einzustellen, falls die durch das Spannungssignal (120) angezeigte Spannung außerhalb des vorbestimmten Spannungsbandes (ΔUb) liegt, und die Größe des Phasenwinkels während einer Netzstörung konstant zu halten, wenn die durch das Spannungssignal (120) angezeigte Spannung außerhalb des vorbestimmten Spannungsbandes (ΔUb) liegt;
**dadurch gekennzeichnet, dass**
- die Steuereinheit (122) dafür ausgelegt ist, den Phasenwinkel zwischen der Spannung und dem Strom des Ausgangsstroms (108) an der Grenze des vorbestimmten Spannungsintervalls schrittweise zu ändern; und
- die Steuereinheit (122) dafür ausgelegt ist, mit einem konstanten Inband-Wert des Phasenwinkels zwischen der Spannung und dem Strom des Ausgangsstroms (108) zu arbeiten, falls die durch das Spannungssignal (120) angezeigte Spannung innerhalb des vorbestimmten Spannungsbandes liegt.

2. Wandlervorrichtung (102) gemäß Anspruch 1,
- wobei die Steuereinheit (122) dafür ausgelegt ist, die Größe des Außerband-Wertes (170a, 170b) des Phasenwinkels in Abhängigkeit von einer Größe einer Spannungsstörung der Spannung im Stromnetz (112) einzustellen.

3. Wandlervorrichtung (102) gemäß Anspruch 1,
- wobei die Steuereinheit (122) dafür ausgelegt ist, den Wirkstrom des Ausgangsstroms (108) auf Null zu setzen, falls die durch das Spannungssignal (120) angezeigte Spannung außerhalb eines vorbestimmten Spannungsbandes liegt.

4. Wandlervorrichtung (102) gemäß Anspruch 3,
- wobei die Steuereinheit (122) dafür ausgelegt ist, die reaktive Komponente des Ausgangsstroms (108) in Abhängigkeit vom Spannungssignal (120) zu verändern.

5. Wandlervorrichtung (102) gemäß einem der vorstehenden Ansprüche,
- ferner einen Steuereingang zum Empfangen eines Steuersignals umfassend;
- wobei die Steuereinheit (122) dafür ausgelegt ist, in Reaktion auf das Steuersignal, einen Inband-Wert und/oder einen Außerband-Wert (170a, 170b) eines Phasenwinkels zwischen der Spannung und dem Strom des Ausgangsstroms (108) einzustellen.

6. Kraftwerk, umfassend
- eine Wandlervorrichtung (102) gemäß Anspruch 1.

7. Kraftwerk gemäß Anspruch 6,
- ferner eine Kraftwerk-Steuereinheit (122) umfassend, um ein Steuersignal an die Wandlervorrichtung (102) bereitzustellen zum Einstellen eines Außerband-Wertes (170a, 170b) des Phasenwinkels zwischen der Spannung und dem Gesamtstrom des Ausgangsstroms (108).

8. Verfahren zum Umwandeln eines Eingangsstroms (106) in einen Ausgangsstrom (108), wobei das Verfahren Folgendes umfasst:
- Empfangen eines Spannungssignals (120), wobei das Spannungssignal (120) eine Spannung in einem Stromnetz (112) anzeigt, an das der Ausgangsstrom (108) geliefert wird; wobei
- der Phasenwinkel zwischen der Spannung und dem Strom des Ausgangsstroms (108) auf einen konstanten Außerband-Wert (170a, 170b) eingestellt wird, falls die durch das Spannungssignal (120) angezeigte Spannung außerhalb des vorbestimmten Spannungsbandes liegt; und
- die Größe des Phasenwinkels während einer Netzstörung konstant gehalten wird, wenn die durch das Spannungssignal (120) angezeigte Spannung außerhalb des vorbestimmten Spannungsbandes (ΔUb) liegt;
**dadurch gekennzeichnet, dass**
- der Phasenwinkel zwischen der Spannung und dem Strom des Ausgangsstroms (108) an der Grenze des vorbestimmten Spannungsintervalls schrittweise geändert wird; und
- mit einem konstanten Inband-Wert des Phasenwinkels zwischen der Spannung und dem Strom des Ausgangsstroms (108) gearbeitet wird, falls die durch das Spannungssignal (120) angezeigte Spannung innerhalb des vorbestimmten Spannungsbandes liegt.

9. Verfahren zum Betreiben einer Kraftwerk-Steuereinheit (122), wobei das Verfahren Folgendes umfasst:
- Bereitstellen eines Steuersignals an eine Steuereinheit (122) einer Wandlervorrichtung (102), wobei die Wandlervorrichtung (102) dafür ausgelegt ist, einen Eingangsstrom (106) in einen Ausgangsstrom (108) umzuwandeln, indem das Verfahren gemäß Anspruch 8 ausgeführt wird; und
- das Steuersignal dafür ausgelegt ist, dass die Steuereinheit (122) der Wandlervorrichtung (102) einen Außerband-Wert (170a, 170b) eines Phasenwinkels zwischen der Spannung und dem Strom des Ausgangsstroms (108) einstellt.

10. Computerlesbarer Datenträger, wobei auf dem computerlesbaren Datenträger ein Computerprogramm zum Steuern eines Phasenwinkels eines Ausgangsstroms (108) einer Wandlervorrichtung (102) gespeichert ist, wobei das Computerprogramm, wenn es von einem Datenprozessor ausgeführt wird, dafür ausgelegt ist, das Verfahren wie in Anspruch 8 beschrieben zu steuern oder auszuführen.

11. Programmelement, wobei das Programmelement dafür ausgelegt ist, einen Phasenwinkel eines Ausgangsstroms (108) einer Wandlervorrichtung (102) zu steuern, wobei das Programmelement, wenn es von einem Datenprozessor ausgeführt wird, dafür ausgelegt ist, das Verfahren wie in Anspruch 8 beschrieben zu steuern oder auszuführen.

12. Computerlesbarer Datenträger, wobei auf dem computerlesbaren Datenträger ein Computerprogramm zum Einstellen eines Außerband-Wertes (170a, 170b) eines Phasenwinkels zwischen der Spannung und dem Strom eines Ausgangsstroms (108) einer Wandlervorrichtung (102) gespeichert ist, wobei das Computerprogramm, wenn es von einem Datenprozessor ausgeführt wird, dafür ausgelegt ist, das Verfahren wie in Anspruch 9 beschrieben zu steuern oder auszuführen.

13. Programmelement, wobei das Programmelement dafür ausgelegt ist, einen Außerband-Wert (170a, 170b) eines Phasenwinkels zwischen der Spannung und dem Strom eines Ausgangsstroms (108) einer Wandlervorrichtung (102) einzustellen, wobei das Programmelement, wenn es von einem Datenprozessor ausgeführt wird, dafür ausgelegt ist, das Verfahren wie in Anspruch 9 beschrieben zu steuern oder auszuführen.

## Revendications

1. Dispositif (102) de convertisseur pour transformer une énergie (106) d'entrée en une énergie (108) électrique de sortie, le dispositif (102) de convertisseur comprenant :
- une entrée (118) de tension pour recevoir un signal (120) de tension, le signal (120) de tension indiquant une tension dans un réseau (112) d'électricité, auquel le dispositif (102) de convertisseur est relié pendant un fonctionnement, afin de fournir l'énergie (108) électrique de sortie au réseau (112) d'électricité;
- une unité (122) de commande;
dans lequel
- l'unité de commande est configurée pour fixer l'angle de phase entre la tension et le courant de l'énergie (108) électrique de sortie, à une valeur (170a, 170b) hors bande constante, si la tension indiquée par le signal (120) de tension est en-dehors de la bande (ΔUb) déterminée à l'avance, et pour maintenir la valeur de l'angle de phase constante pendant un défaut de secteur, lorsque la tension indiquée par le signal (120) de tension est en dehors de la bande (ΔUb) de tension déterminée à l'avance;
**caractérisé en ce que**
- l'unité (122) de commande est configurée pour changer l'angle de phase entre la tension et le courant de l'énergie (108) électrique de sortie, à la limite de l'intervalle de tension déterminée à l'avance, d'une façon échelonnée et
- l'unité (122) de commande est configurée pour fonctionner en ayant une valeur en bande constante de l'angle de phase, entre la tension et le courant de l'énergie (108) électrique de sortie, si la tension indiquée par le signal (120) de tension est à l'intérieur de la bande de tension déterminée à l'avance.

2. Dispositif (102) de convertisseur suivant la revendication 1, dans lequel l'unité (122) est configurée pour fixer la grandeur de la valeur (170a, 170b) hors bande de l'angle de phase en fonction d'une valeur d'une perturbation de la tension dans le réseau (112) d'électricité.

3. Dispositif (102) de convertisseur suivant la revendication 1,
- l'unité (122) de commande est configurée pour fixer le courant de l'énergie (108) électrique de sortie à zéro, si la tension indiquée par le signal (120) de tension est en dehors d'une bande de tension déterminée à l'avance.

4. Dispositif (102) de convertisseur suivant la revendication 3, dans lequel
- l'unité (122) de commande est configurée pour faire varier la composante réactive de l'énergie (108) électrique de sortie en fonction du signal (120) de tension.

5. Dispositif (102) de convertisseur suivant l'une des revendications précédentes,
- comprenant, en outre, une entrée de commande pour recevoir un signal de commande;
- l'unité (122) de commande étant configurée pour fixer, en réaction au signal de commande, au moins l'une d'une valeur en bande et d'une valeur (170a, 170b) hors bande d'un angle de phase entre la tension et le courant de l'énergie (108) électrique de sortie.

6. Centrale électrique comprenant
- un dispositif (102) de convertisseur suivant la revendication 1.

7. Centrale électrique suivant la revendication 6,
- comprenant, en outre, une unité (122) de commande de centrale électrique pour fournir un signal de commande au dispositif (102) de convertisseur, pour fixer une valeur (170a, 170b) hors bande d'un angle de phase entre la tension et le courant total de l'énergie (108) électrique de sortie.

8. Procédé pour transformer une énergie (106) d'entrée en une énergie (108) électrique de sortie, le procédé comprenant :
- la réception d'un signal (120) de tension, le signal (120) de tension indiquant une tension dans un réseau (112) d'électricité auquel l'énergie (108) électrique de sortie est fournie;
dans lequel
- on fixe l'angle de phase entre la tension et le courant de l'énergie (108) électrique de sortie à une valeur (170a, 170b) hors bande constante, si la tension indiquée par le signal (120) de tension est à l'extérieur de la bande de tension déterminée à l'avance et
- on maintient la valeur de l'angle de phase constante pendant un défaut de secteur, lorsque la tension indiquée par le signal (120) de tension est en-dehors de la bande (ΔUb) de tension déterminée à l'avance;
**caractérisé en ce que**
- on change l'angle de phase entre la tension et le courant de l'énergie (108) électrique de sortie à la limite de l'intervalle de tension déterminée à l'avance, d'une manière échelonnée et
- on fait fonctionner à une valeur en bande constante de l'angle de phase entre la tension et le courant de l'énergie (108) électrique de sortie, si la tension indiquée par le signal (120) de tension est à l'intérieur de la bande de tension déterminée à l'avance.

9. Procédé pour faire fonctionner une unité (122) de commande d'une centrale électrique, le procédé comprenant :
- l'envoi d'un signal de commande à une unité (122) de commande d'un dispositif (102) de convertisseur, le dispositif (102) de convertisseur étant configuré pour transformer une énergie (106) d'entrée en une énergie (108) électrique de sortie, en effectuant le procédé suivant la revendication 8 et
- le signal de commande étant configuré, pour régler l'unité (122) de commande du dispositif (102) de convertisseur à une valeur (170a, 170b), hors bande de l'angle de phase entre la tension et le courant de l'énergie (108) électrique de sortie.

10. Support déchiffrable par ordinateur, dans lequel il est mémorisé, sur le support déchiffrable par ordinateur, un programme d'ordinateur pour commander un angle de phase d'une énergie (108) électrique de sortie d'un dispositif (12) de convertisseur, le programme d'ordinateur étant, lorsqu'il est exécuté par un processeur de données, propre à commander ou à effectuer le procédé suivant la revendication 8.

11. Elément de programme, l'élément de programme étant configuré pour commander un angle de phase d'une énergie (108) électrique de sortie d'un dispositif (102) de convertisseur, l'élément de programme étant, lorsqu'il est exécuté par un processeur de données, propre à commander ou à effectuer le procédé de la revendication 8.

12. Support déchiffrable par ordinateur dans lequel, sur le support déchiffrable par ordinateur est mémorisé un programme d'ordinateur pour fixer une valeur (170a, 170b) hors bande de l'angle de phase entre la tension et le courant d'une énergie (108) électrique de sortie d'un dispositif (102) de convertisseur, le programme d'ordinateur étant, lorsqu'il est exécuté par un processeur de données, propre à commander ou à effectuer le procédé de la revendication 9.

13. Elément de programme, l'élément de programme étant configuré pour fixer une valeur (170a, 170b) hors bande d'un angle de phase entre la tension et le courant d'une énergie (108) électrique de sortie d'un dispositif (102) de convertisseur, l'élément de programme étant, lorsqu'il est exécuté par un processeur de données, apte à commander ou à effectuer le procédé de la revendication 9.
